# EUROPÄISCHE PATENTSCHRIFT

(11) **EP 3 909 801 B1**
(45) Veröffentlichungstag und Bekanntmachung des Hinweises auf die Patenterteilung: **29.11.2023**
(21) Anmeldenummer: 21173493.4
(22) Anmeldetag: 12.05.2021
(51) Int. Cl.: B60L 5/24, B60L 5/18, B60L 3/00, B61D 17/12, H01B 17/62, H01B 3/46

(54) **SCHIENENFAHRZEUG UND VERFAHREN ZUR HERSTELLUNG EINES SCHIENENFAHRZEUGS**
RAIL VEHICLE AND METHOD FOR PRODUCING A RAIL VEHICLE
VÉHICULE FERROVIAIRE ET PROCÉDÉ DE FABRICATION D'UN VÉHICULE FERROVIAIRE

(30) Priorität: 12.05.2020 DE 102020205958
(43) Veröffentlichungstag der Anmeldung: 17.11.2021
(73) Patentinhaber: ALSTOM Holdings, 93400 Saint-Ouen-sur-Seine (FR)
(72) Erfinder: Maaß, Jörg-Torsten, 16515 Oranienburg (DE); Tessmer, Wolfram, 13587 Berlin (DE)
(74) Vertreter: Ramrath, Lukas

(56) Entgegenhaltungen:
- DE-A1-102012 218 828
- DE-A1-102013 204 706
- DE-A1-102015 121 876

## Beschreibung

Die Erfindung betrifft ein Schienenfahrzeug sowie ein Verfahren zur Herstellung eines Schienenfahrzeugs.

Schienenfahrzeuge wie z.B. Vollbahnen verfügen über Hochspannungskomponenten, deren Auswahl und Anordnung im Wesentlichen durch die zum Einsatz kommenden Spannungssysteme erfolgt, z.B. AC 25/15 kV-Spannungssysteme oder DC 1500/3000 V-Spannungssysteme. Solch eine Hochspannungskomponente kann z.B. ein Pantograph sein, der Spannung von einer Hochspannungsleitung abgreift.

Die Anordnung der Komponenten für Spannungssysteme erfolgt üblicherweise auf dem Dach des Schienenfahrzeugs, der im Sinne der elektrischen Sicherheit als abgeschlossener Betriebsraum betrachtet wird. Ein Zugang zum Dachbereich im Zusammenhang mit Wartungsarbeiten erfordert eine Freischaltung und Erdung sowohl der Hochspannungsanlage des Fahrzeugs sowie der Fahrleitung.

Es existieren technische Lösungen, bei denen Hochspannungskomponenten in Containern untergebracht sind, die auch im Fahrzeuginneren, z.B. in einem Unterflurbereich, angeordnet werden können. Dachbereiche und Container bestehen zumeist aus Aluminium oder Stahl und werden in die Schutzerdung des gesamten Schienenfahrzeuges eingebunden. Die Isolierung gegenüber Erdpotential erfolgt durch eine Kombination aus Feststoffisolierung, z.B. für Stützisolatoren, Leistungsschalter sowie Strom- und Spannungssensoren, und die sie umgebende Luft. Die notwendige Auslegung der Kriechstecken entlang der Feststoffisolatoren und der Luftstrecken zwischen Hochspannung und Erdpotential wird als Isolations-Koordination bezeichnet und erfolgt nach technischen Regelwerken, z.B. der Norm EN 50124-1.

Ein elektrischer Überschlag zwischen einem unter Hochspannung stehendem und einem geerdetem metallischen Leiter kann einen Lichtbogen zur Folge haben, der mit erheblicher Hitzeentwicklung verbunden sein kann. Diese kann zur Beschädigung von Komponenten und der Dachstruktur eines Schienenfahrzeugs führen. So können z.B. Löcher in die Dachstruktur geschmolzen werden und Feuer und Rauch in den Innenraum eindringen. Elektrische Überschläge können z.B. durch Vögel, aber auch durch Gegenstände und andere Lebewesen, verursacht werden, welche die Luftstrecke zwischen einer Hochspannungsleitung und dem geerdeten Dach teilweise oder ganz überbrücken. Dazu gehören z.B. eine beschädigt herabhängende, unter Spannung stehende Oberleitung, Zweige und Äste von Bäumen oder auch Kleinsäugetiere. Auch Überspannungsereignisse können zum Versagen der Luftstrecke und dem Zünden eines Lichtbogens führen.

Besonders problematisch kann dies in einer Nähe zwischen einem Mülldepot und vielen im Freifeld unter Spannung aufgerüstet abgestellten Fahrzeugen sein, wobei dann eine Vielzahl von Kurzschlüssen durch Vögel auf dem Dach beim Berühren von unter Spannung stehenden Komponenten ausgelöst werden können.

Auch kann es vorkommen, dass der Kurzschluss durch die Schutzeinrichtungen des Schienenfahrzeugs nicht erkannt wird, wobei dann das nächstgelegene Unterwerk abgeschaltet wird. Damit sind alle Fahrzeuge im jeweiligen Netzabschnitt zumindest temporär betroffen, d.h. es kommt zu betrieblichen Einschränkungen über das direkt betroffene Fahrzeug hinaus.

Die DE 10 2012 218 828 A1 offenbart einen Stromabnehmer für ein Schienenfahrzeug mit einem Abnehmerarm und einem Isolationssystem, das isolierende Stützen zur elektrisch isolierenden Befestigung des Abnehmerarms an einem elektrisch geerdeten Fahrzeugdachelement über einer elektrisch geerdeten Dachfläche aufweist.

Die DE 10 2013 204 706 A1 offenbart einen Widerstandsbelag für ein Gleichstrom isoliersystem
Die DE 10 2015 121 876 A1 offenbart eine Vorrichtung zum Erkennen eines Spannungssystems, ein Schienenfahrzeug und ein Verfahren zum Erkennen eines Spannungssystems.

Es stellt sich das technische Problem, ein Schienenfahrzeug sowie ein Verfahren zur Herstellung eines Schienenfahrzeugs zu schaffen, welche die genannten Nachteile beheben und insbesondere eine elektrische Betriebssicherheit des Schienenfahrzeugs, insbesondere eine Isolation von Hochspannungskomponente des Schienenfahrzeugs, verbessern.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Schienenfahrzeug. Das Schienenfahrzeug kann insbesondere eine Vollbahn oder ein Teil einer Vollbahn sein. Das Schienenfahrzeug umfasst mindestens eine Hochspannungskomponente. Eine Hochspannungskomponente bezeichnet hierbei eine Komponente oder ein Element des Schienenfahrzeugs, welche bei einem ordnungsgemäßen Betrieb des Schienenfahrzeugs mit einer Hochspannung beaufschlagt wird oder werden kann, beispielsweise mit einer Wechselspannung mit einer Amplitude von 15 kV oder 25 kV oder mit einer Gleichspannung von 3 kV.

Beispielhafte Hochspannungskomponenten sind ein Stromabnehmer, ein Wechselrichter oder Teile davon, beispielsweise Leistungs-Schaltelemente wie IGBT, Hochspannungsleitungen wie zum Beispiel Stromschienen, ein Überspannungsschutzgerät, ein Leistungsschutzschalter und ein Transformator oder Teile davon.

Weiter umfasst das Schienenfahrzeug mindestens ein Isolierelement zur elektrischen Isolation. Weiter ist die mindestens eine Hochspannungskomponente in einem Gehäuse, welches auch als Container bezeichnet werden kann, und dem mindestens einen Isolierelement zwischen der Hochspannungskomponente und der Bodenfläche des Gehäuses angeordnet. Das Gehäuse kann hierbei auf der Dachfläche des Fahrzeugdachs angeordnet sein. Allerdings ist es auch vorstellbar, dass das Gehäuse an anderer Stelle im Schienenfahrzeug, beispielsweise in einem Unterflurbereich, angeordnet ist.

Alternativ ist die mindestens eine Hochspannungskomponente auf dem Fahrzeugdach und das mindestens eine Isolierelement zwischen der Hochspannungskomponente und der Dachfläche des Fahrzeugdachs angeordnet.

Das Isolierelement kann hierbei in Vertikalrichtung über der Bodenfläche/Dachfläche angeordnet sein, wobei die Vertikalrichtung parallel zur Richtung einer Gravitationskraft und entgegengesetzt zu dieser orientiert ist. Zwischen dem Isolierelement und der Hochspannungskomponente kann hierbei eine Luftstrecke vorhanden sein. Mit anderen Worten ist zwischen dem Isolierelement und der Hochspannungskomponente Luft angeordnet.

Erfindungsgemäß ist das Isolierelement ein Feststoffisolierelement mit Halbleitereigenschaften. Dies kann bedeuten, dass eine elektrische Leitfähigkeit des Isolierelements zwischen der elektrischen Leitfähigkeit von elektrischen Leitern und der elektrischen Leitfähigkeit von Nichtleitern, also beispielsweise in einem Bereich von 10^-8 S/cm (einschließlich) bis 10^4 S/cm (einschließlich), liegt.

Ein Feststoffisolierelement ist ein Element mit der genannten elektrischen Leitfähigkeit im festen Aggregatzustand, insbesondere in einem gewünschten Betriebstemperaturbereich des Schienenfahrzeugs, beispielsweise in einem Temperaturbereich von -20 °C bis +50 °C. Das Feststoffisolierelement kann hierbei elastisch oder plastisch verformbar sein, vorzugsweise jedoch elastisch verformbar. Das Feststoffisolierelement kann hierbei amorph oder kristallin sein.

Durch die Ausbildung des Isolierelements als Feststoffisolierelement mit Halbleitereigenschaften ergibt sich in vorteilhafter Weise eine erhöhte elektrische Betriebssicherheit des Schienenfahrzeugs. Insbesondere können durch die Verwendung des vorgeschlagenen Isolierstoffes in zuverlässiger Weise akkumulierte Oberflächenladungen abgebaut werden, die sich im Falle einer Überbrückung einer Luftstrecke zwischen der Hochspannungskomponente und dem Isolierelement aufgrund eines Kurzschlusses oder eines Lichtbogens auf/in dem Isolierelement ansammeln können.

Hierbei können diese Oberflächenladungen über ein mit dem Isolierelement elektrisch verbundenes weiteres Element, beispielsweise über einen elektrisch leitfähigen Bereich der Bodenfläche/Dachfläche, aus dem Isolierelement abgeleitet werden. Hierdurch ergibt sich in vorteilhafter Weise, dass eine Erosion des Isolierelements aufgrund von Entladungsfunken, insbesondere in Randbereichen, reduziert oder vollständig vermieden wird.

So ist bekannt, dass bei gewöhnlichen Feststoffisolierungen mit nichtleitenden Eigenschaften die vorhergehend erläuterten akkumulierten Oberflächenladungen sich in Randbereichen sammeln, insbesondere wenn eine Oberfläche der Feststoffisolierung verschmutzt und oder feucht ist. Dann können in diesen Randbereichen die erläuterten Entladungsfunken mit der damit verbundenen Erosion auftreten, wodurch eine Zerstörung der Feststoffisolierung und eine damit verbundene reduzierte Betriebssicherheit und Lebensdauer bedingt wird. Dies wird mit der vorgeschlagenen Feststoffisolierung mit Halbleitereigenschaften in vorteilhafter Weise vermieden.

Weiter ergibt sich in vorteilhafter Weise, dass Wechselspannungen im Vergleich zu einer Feststoffisolierung mit nichtleitenden Eigenschaften die nicht überbrückten Bereiche zwischen Hochspannungskomponente und Isolierelement weniger stark belasten. Eine solche Belastung ergibt sich bei der Feststoffisolierung mit nichtleitenden Eigenschaften daraus, dass Ladungsträger sich an der gesamten Oberfläche des Isolierelements und somit nicht nur in Randbereichen kumulieren können, wobei dann bei Wechsel der Polarität der von der Hochspannungskomponente geführten Spannung Entladungsfunken in Luftstrecken ober- und unterhalb der Feststoffisolierung mit der vorhergehend erläuterten Erosion erzeugt werden können.

Weiter ergibt sich in vorteilhafter Weise, dass ein verbesserter Schutz von Lebewesen wie zum Beispiel Vögeln und Kleinsäugetieren geschaffen wird, die sich auf der Dachfläche/Bodenfläche befinden, insbesondere da das vorhergehend erläuterte Risiko des Auftritts von Entladungsfunken reduziert wird.

Weiter kann die elektrische Leitfähigkeit des Isolierelements derart gewählt werden, dass die durch den Abbau der Oberflächenladung bedingte Stromstärke des Abbaustroms kleiner als ein vorbestimmter Schwellwert, beispielsweise kleiner als 2 mA, ist. Hierdurch ergibt sich in vorteilhafter Weise eine weitere Verbesserung der Betriebssicherheit, insbesondere da Lebewesen wie zum Beispiel Vögel nicht durch eine zu hohe Stromstärke des Ableitstromes gefährdet sind, wenn sie sich auf dem Isolierelement befinden und gegebenenfalls die Luftstrecke zwischen Hochspannungskomponente und Isolierelement überbrücken.

Weiter erfindungsgemäß liegt das Isolierelement an der Bodenfläche oder der Dachfläche an, insbesondere in Teilbereichen. Dies kann bedeuten, dass kein Luftspalt zwischen Isolierelement und Bodenfläche bzw. zwischen Isolierelement und Dachfläche vorhanden ist. Insbesondere kann eine boden- oder dachflächenseitige Oberfläche des Isolierelements direkt, also bündig, an der Bodenfläche oder Dachfläche anliegen. Liegt das gesamte Isolierelement derart an der Boden- oder Dachfläche an, so kann dies auch als vollflächiges Anliegen bezeichnet werden.

Die Vermeidung von Luftspalten oder Lufteinschlüssen zwischen der vorgeschlagenen Feststoffisolierung und der Dach- oder Bodenfläche ermöglicht hierbei in vorteilhafter Weise einen zuverlässigen und zeitlich schnellen Abbau der akkumulierten Ladungsträger vom Isolierelement über die Dach- oder Bodenfläche. Diese Fläche kann hierzu, wie nachfolgend noch näher erläutert, ein Referenzpotential, insbesondere ein Erd- oder Massepotential, aufweisen und elektrisch mit dem Isolierelement verbunden sein.

Weiter ergibt sich durch die Vermeidung von Luftspalten oder Lufteinschlüssen, dass ein Risiko von lokalen elektrischen Entladungen im Bereich solcher Luftspalte oder-einschlüsse und somit auch das Auftreten hiermit verbundener Entladungsfunken und der dadurch bedingten Erosion reduziert wird. Dies wiederum führt in vorteilhafter Weise zu einer weiteren Verbesserung der Betriebssicherheit sowie der Betriebszuverlässigkeit der Feststoffisolierung.

Alternativ liegt das Isolierelement an einem elektrisch leitfähigen, insbesondere einem metallischen, Bereich der Hochspannungskomponente an. Mit anderen Worten kann ein solcher Bereich von dem Isolierelement zumindest teilweise, vorzugsweise aber vollständig, abgedeckt sein. Es ist auch möglich, dass ein erstes Isolierelement an der Bodenfläche oder der Dachfläche anliegt, wobei ein weiteres Isolierelement an dem elektrisch leitfähigen Bereich der Hochspannungskomponente anliegt.

Hierdurch kann in vorteilhafter Weise das Risiko der Entstehung eines Lichtbogens bei einer Überbrückung der Luftstrecke zwischen der Hochspannungskomponente, insbesondere dem leitfähigen Bereich, und der Dach- oder Bodenfläche bzw. dem daran anliegenden Isolierelement weiter reduziert werden.

In einer weiteren Ausführungsform ist die Bodenfläche oder die Dachfläche zumindest in Teilbereichen elektrisch leitend mit dem Isolierelement verbunden. So ist es vorstellbar, dass das Schienenfahrzeug im Bereich der Dachfläche oder das Gehäuse im Bereich der Bodenfläche lackiert ist, wodurch eine elektrisch isolierende Schicht auf der Dach- oder der Bodenfläche angeordnet sein kann. In einem solchen Fall kann durch die Entfernung des Lacks in Teilbereichen die genannte elektrisch leitende Verbindung geschaffen werden. Allerdings ist es auch möglich, dass das Isolierelement unmittelbar auf einer elektrisch leitfähigen Dachfläche oder Bodenfläche oder einem elektrisch leitfähigen Teilbereich hiervon angeordnet ist.

Hierdurch ergibt sich in vorteilhafter Weise ein zuverlässiger und zeitlich schneller Abbau der vorhergehend erläuterten akkumulierten Ladungsträger, wodurch sich die elektrische Betriebssicherheit des Schienenfahrzeugs weiter erhöht.

In einer weiteren Ausführungsform weist die Bodenfläche oder die Dachfläche ein Referenzpotential auf. Beispielsweise kann die Bodenfläche oder die Dachfläche mit dem Referenzpotential elektrisch verbunden sein. Das Referenzpotential kann insbesondere ein Erdpotential oder Massepotential des Schienenfahrzeugs sein. Beispielsweise kann die Bodenfläche oder die Dachfläche mit einem geerdeten Wagenkasten des Schienenfahrzeugs elektrisch verbunden sein oder von dem Wagenkasten oder einem Teil davon ausgebildet werden.

In einer weiteren Ausführungsform ist die Hochspannungskomponente in einer gemeinsamen Projektionsebene, die senkrecht zu einer normalen der Bodenfläche oder der Dachfläche orientiert ist, zumindest teilweise innerhalb des Isolierelements angeordnet. Dies kann bedeuten, dass die Umrisslinie der Hochspannungskomponente in der gemeinsamen Projektionsebene teilweise oder vollständig innerhalb der Umrisslinie des Isolierelements angeordnet ist. Weiter ist ein minimaler Abstand, insbesondere ein Abstand entlang einer lateralen Richtung, zwischen einem Rand der Hochspannungskomponente und einem Rand des Isolierelements in der gemeinsamen Projektionsebene größer als ein vorbestimmter Abstand, insbesondere größer als Null. Der Rand kann hierbei durch die Umrisslinie der Hochspannungskomponente bzw. des Isolierelements gebildet sein.

Der laterale Abstand kann ein Abstand entlang einer Längs- und / oder Querachse des Schienenfahrzeugs bezeichnen. Diese kann senkrecht zu der erläuterten Vertikalrichtung orientiert sein, die parallel zu einer Hochachse des Schienenfahrzeugs orientiert sein kann. Eine Längsachse des Schienenfahrzeugs kann senkrecht zu den beiden genannten Achsen orientiert sein.

Anschaulich gesprochen ragt das Isolierelement von oben betrachtet in dieser Ausführungsform seitlich über die Hochspannungskomponente hinaus. Hierdurch ergibt sich in vorteilhafter Weise, dass die Betriebssicherheit des Schienenfahrzeugs weiter verbessert wird, da die Länge einer Kriechstrecke für elektrische Ströme, die durch das Isolierelement mit Halbleitereigenschaften gebildet wird, ausreichend an gewünschte Isolationseigenschaften, die beispielsweise in der Norm EN 50124-1 angeführt sind, angepasst werden kann. Insbesondere kann also der vorhergehend erläuterte Abstand an derart gewünschte Isolationseigenschaften angepasst werden.

In einer weiteren Ausführungsform ist das Isolierelement zumindest teilweise oder aber vollständig aus einem ausgehärteten flüssigen, flüssig-pastösen oder pastösen Material ausgebildet. Das flüssige, flüssig-pastöse oder pastöse Material kann hierbei ein Isoliermaterial, insbesondere ein Isoliermaterial mit Halbleitereigenschaften oder ein nichtleitendes Isoliermaterial sein. Im letzteren Fall kann vor der Aushärtung dem flüssigen, flüssig-pastösen oder pastösen Material Zusatzmaterial hinzugefügt werden, welches Halbleitereigenschaften der resultierenden Materialzusammensetzung bedingt.

Ein flüssiges Material kann hierbei eine Viskosität in einem Bereich von 1 Pa sec (einschließlich) bis 100 Pa·sec (einschließlich) aufweisen. Ein pastöses Material kann eine Viskosität in einem Bereich von 10000 Pa sec (einschließlich) bis 1000000 Pa·sec (einschließlich) aufweisen. Ein flüssig-pastöses Material kann eine Viskosität in einem Bereich von 100 Pa sec (ausschließlich) bis 10000 Pa·sec (ausschließlich) aufweisen.

So ist es beispielsweise vorstellbar, dass Isolierelement durch Auswertung von Silikonkautschuk zu bilden, wobei dem Silikonkautschuk mindestens ein weiteres Zusatzmaterial vor der Aushärtung hinzugefügt wird. Beispielsweise kann das Zusatzmaterial aus Rußpartikeln bestehen.

Hierdurch ergibt sich in vorteilhafter Weise einerseits, dass gewünschte Materialeigenschaften des ausgehärteten flüssigen oder pastöse Materials, beispielsweise eine Temperaturstabilität, eine Nichtbrennbarkeit, eine Elastizität sowie wasserabweisende, schmutzabweisende und rauchschutzbedingende Eigenschaften, mit den gewünschten Halbleitereigenschaften kombiniert werden können. Weiter ergibt sich in vorteilhafter Weise eine gute Reparaturfähigkeit des entsprechend ausgebildeten Feststoffisolierelements. Ebenfalls ergibt sich in technisch vorteilhafter Weise, dass durch die erläuterte Beimischung eines Zusatzmaterials in einfacher Weise gewünschte Eigenschaften, insbesondere die gewünschten Halbleitereigenschaften, hergestellt werden können.

In einer weiteren Ausführungsform ist das Isolierelement als Matte ausgebildet oder umfasst eine Matte. Hierdurch ergibt sich in vorteilhafter Weise eine einfache Herstellung des vorgeschlagenen Isolierelements, insbesondere da Matten leicht vorgefertigt werden können und leicht auf der Fläche angeordnet werden können. Insbesondere aufgrund einer in der Regel vorhandenen Verformbarkeit von mattenförmigen Körpern kann ein solches Isolierelement leicht in gewünschter Weise auf der Dach-oder Bodenfläche angeordnet werden, insbesondere vollflächig.

Alternativ ist es möglich, dass das Isolierelement mit Halbleitereigenschaften plattenförmig ausgebildet ist oder einen plattenförmigen in Abschnitt umfasst.

In einer weiteren Ausführungsform ist ein elektrisch leitfähiges Element in das Isolierelement eingebettet, welches mit der Bodenfläche oder Dachfläche elektrisch verbunden ist.

Alternativ oder kumulativ kann das elektrisch leitfähige Element mit dem vorhergehend erläuterten Referenzpotential des Schienenfahrzeugs elektrisch verbunden sein, beispielsweise mit einem geerdeten Wagenkasten des Schienenfahrzeugs.

Das elektrisch leitfähige Element kann beispielsweise eine Metallfolie oder ein Metallgitter sein. Dieses elektrisch leitfähige Element kann punktuell oder in verschiedenen Abschnitten elektrisch mit der Dach- oder Bodenfläche und/oder dem Referenzpotential verbunden sein. In einer solchen Ausführungsform kann auf die vorhergehend erläuterte anliegende Anordnung des Isolierelements an der Bodenfläche oder der Dachfläche verzichtet werden.

Ist das elektrisch leitfähige Element mit dem Referenzpotential elektrisch verbunden, so kann in vorteilhafter Weise die Anordnung des vorgeschlagenen Isolierelements auch auf nicht leitfähigen Dachflächen oder Bodenflächen erfolgen, beispielsweise wenn eine Außenhülle des Schienenfahrzeugs aus nichtleitendem Faserverbundmaterial besteht. Ebenfalls ist eine solche Ausführungsform vorteilhaft, wenn keine zuverlässige elektrische Verbindung zwischen dem vorgeschlagen Isolierelement und der Dachfläche oder der Bodenfläche hergestellt werden kann.

In einer weiteren Ausführungsform ist das erläuterte Feststoffisolierelement oder zusätzlich ein weiteres Feststoffisolierelement mit Halbleitereigenschaften an der Hochspannungskomponente angeordnet. Das weitere Feststoffisolierelement kann hierbei entsprechend den weiterbildenden Aspekten des bereits erläuterten Feststoffisolierelements mit Halbleitereigenschaften weitergebildet sein. Insbesondere kann das weitere Feststoffisolierelement auf einem potentialführenden Bereich der Hochspannungskomponente, insbesondere einem metallischen Bereich dieser Hochspannungskomponente, angeordnet sein. Hierdurch wird die elektrische Betriebssicherheit weiter verbessert, da das Risiko der Entstehung eines Lichtbogens bzw. eines Funkenschlags weiter verringert wird.

Weiter vorgeschlagen wird ein Verfahren zur Herstellung eines Schienenfahrzeugs, wobei mindestens eine Hochspannungskomponente und mindestens ein Isolierelement bereitgestellt wird, wobei die mindestens eine Hochspannungskomponente in einem Gehäuse und das mindestens eine Isolierelement zwischen der Hochspannungskomponente und der Bodenfläche des Gehäuses angeordnet wird. Alternativ wird die mindestens eine Hochspannungskomponente auf dem Fahrzeugdach und das mindestens eine Isolierelement zwischen der Hochspannungskomponente und der Dachfläche des Fahrzeugdachs angeordnet.

Erfindungsgemäß wird das Isolierelement als ein Feststoffisolierelement mit Halbleitereigenschaften bereitgestellt.

Durch das Verfahren kann insbesondere ein Schienenfahrzeug gemäß einer der in dieser Offenbarung beschriebenen Ausführungsformen hergestellt werden. Hierdurch ergibt sich in vorteilhafter Weise ein Schienenfahrzeug mit den bereits erläuterten technischen Vorteilen.

Die Erfindung wird anhand von Ausführungsbeispielen näher erläutert. Die Figuren zeigen:
- Fig. 1: eine schematische Ansicht eines Dachbereichs eines Schienenfahrzeugs gemäß dem Stand der Technik,
- Fig. 2: eine schematische Ansicht eines Dachbereichs eines Schienenfahrzeugs gemäß einer ersten Ausführungsform der Erfindung,
- Fig. 3: eine schematische Ansicht eines Dachbereichs eines Schienenfahrzeugs gemäß einer weiteren Ausführungsform der Erfindung.

Nachfolgend bezeichnen gleiche Bezugszeichenelemente mit gleichen oder ähnlichen technischen Merkmalen.

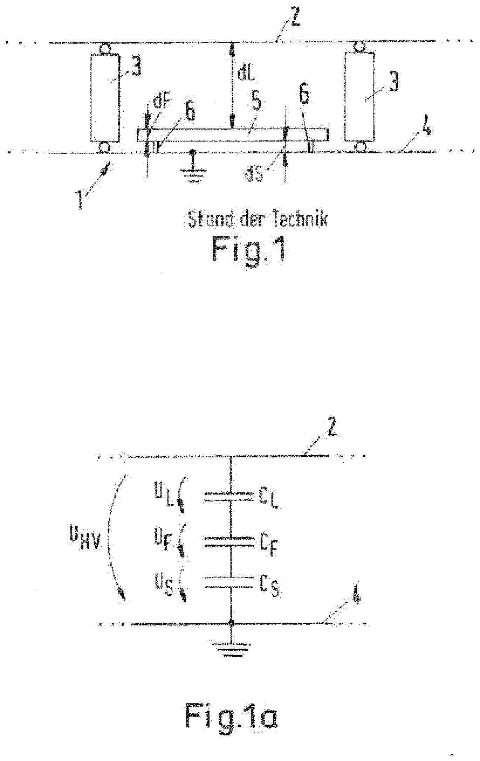

Figur 1 zeigt eine schematische Ansicht eines Schienenfahrzeugs 1 gemäß dem Stand der Technik. Dargestellt ist ein Dachbereich des Schienenfahrzeugs 1, wobei eine Hochspannungsleitung 2 über Isolatoren 3 auf/über einer Dachfläche 4 angeordnet und an dieser befestigt ist. Weiter dargestellt ist ein Feststoffisolierelement 5 mit nichtleitenden elektrischen Eigenschaften, welches über Füße 6 ebenfalls auf der Dachfläche 4 angeordnet ist. Dargestellt ist eine Luftstrecke dL zwischen der Hochspannungsleitung 2 und dem Feststoffisolierelement 5. Ebenfalls dargestellt ist, dass ein Luftspalt dS zwischen dem Feststoffisolierelement 5 und der Dachfläche 4 vorhanden ist. Weiter dargestellt ist eine Dicke dF des Feststoffisolierelements 5. Die dargestellten Längen der Luftstrecke dL, des Luftspaltes dS sowie die Dicke dF des Feststoffisolierelements 5 bestimmen die Isolationseigenschaften der dargestellten Anordnung.

So bilden die Luftstrecke dL, der Luftspalt dS und das Feststoffisolierelement 5 in einem Ersatzschaltbild (siehe Fig. 1a) Kapazitäten C_{L}, C_{F}, Cs, die von der jeweiligen Länge bzw. Dicke sowie den Materialeigenschaften des Feststoffisolierelements abhängen.

In diesem Ersatzschaltbild ist dargestellt, dass über einer ersten Luftstreckenkapazität C_{L}, die durch die Luftstrecke dL zwischen der Hochspannungsleitung 2 und dem Feststoffisolierelement 5 gebildet wird, eine erste Luftstreckenspannung U_{L} abfällt. Über einer Feststoffkapazität C_{F}, die durch das Feststoffisolierelement 5 gebildet wird, fällt eine Feststoffspannung U_{F} ab. Über einer Luftspaltkapazität Cs, die durch den Luftspalt dS zwischen Feststoffisolierelement 5 und der Dachfläche 4 gebildet wird, fällt eine weitere Luftspaltspannung Us ab. Zwischen der Hochspannungsleitung 2 und der Dachfläche 4 fällt eine Spannung U_{HV} ab.

Wird die Luftstrecke dL zwischen Hochspannungsleitung 2 und Feststoffisolierelement 5 zum Beispiel durch einen Vogel überbrückt, so ergibt sich im Ersatzschaltbild eine Parallelschaltung eines Widerstands, welcher durch den Vogel gebildet wird, zu der ersten Luftstreckenkapazität C_{L}. Die Umladung des Feststoffisolierelements 5 auf das Potential der Spannung U_{HV} kann insbesondere den Randbereich des Feststoffisolierelements 5 überlasten sowie zu einer Spannungsbelastung des Luftspalts dS führen. Bei einer solchen Überbrückung der Luftstrecke dL kann daher eine Funkenentladung am Feststoffisolierelement 5 erfolgen, wodurch dieses, insbesondere in Randbereichen sowie an einer dem Luftspalt dS zugewandten Unterseite, erodieren kann.

Für den Fall, dass die Hochspannungsleitung 2 eine Wechselspannung führt, bedingt ein positives Potential auf der Hochspannungsleitung 2, dass sich nach Überbrückung durch zum Beispiel einen Vogel oder auch einen Funkenüberschlag, positive Ladungsträger an einer der Hochspannungsleitung 2 zugewandten Oberfläche des Feststoffisolierelements 5 akkumulieren, insbesondere wenn keine Ladungsträger vom Feststoffisolierelement abfließen können. Mit anderen Worten bleibt ein Potential des Feststoffisolierelements auf einem vorbestimmten, positiven Potential.

Wechselt das Potential auf der Hochspannungsleitung 2 dann zu einem negativen Potential, so ergibt sich in nachteiliger Weise eine höhere, insbesondere eine doppelt so hohe, Potentialdifferenz zwischen der Hochspannungsleitung 2 mit dem negativen Potential und dem Feststoffisolierelement 5, welches das vorhergehend erläuterte positive Potential aufweist, als in einem Szenario ohne an der Oberfläche des Feststoffisolierelements 5 akkumulierte Ladungsträger, welches beispielsweise gilt, wenn Ladungsträger vom Feststoffisolierelement 5 abfließen können. Diese hohe Potentialdifferenz kann zu einem Funkenschlag zwischen Hochspannungsleitung 2 und Feststoffisolierelement 5 führen. Auch kann ein Wechsel des Potentials auf der Hochspannungsleitung 2 dazu führen, dass die weitere Luftspaltkapazität Cs umgeladen wird, wodurch es zu einer unerwünschten (Teil-)Entladung über den Luftspalt kommen kann. Durch die wiederholte Umladung erfolgt eine andauernde Überlastung der Luftstrecke dL und des Luftspaltes dS wodurch das Feststoffisolierelement 5 erodieren kann.

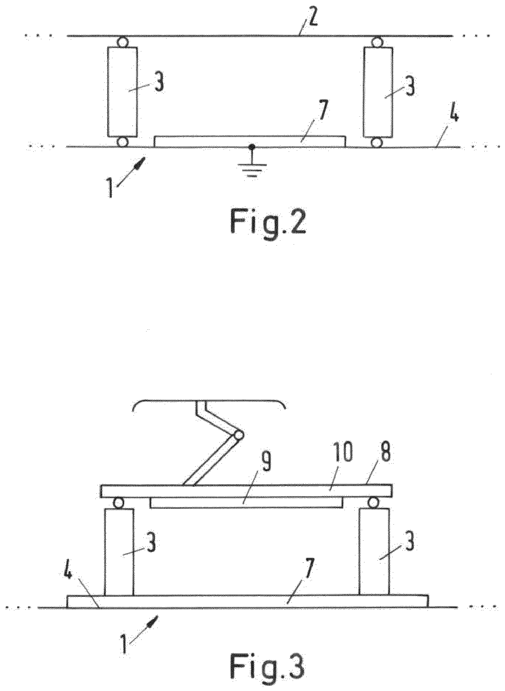

Figur 2 zeigt eine schematische Ansicht eines Dachbereichs eines Schienenfahrzeugs 1 gemäß der Erfindung. Dargestellt ist wiederum die Hochspannungsleitung 2, die über Isolatoren 3 auf/über der Dachfläche 4 angeordnet ist. Weiter dargestellt ist ein als Feststoffisolierelement 7 ausgebildetes Isolierelement, welches an der Dachfläche 4 anliegend auf dieser angeordnet ist. Im Unterschied zu der in Figur 1 dargestellten Ausführungsform weist das Feststoffisolierelement 7 Halbleitereigenschaften auf. Weiter dargestellt ist, dass die Dachfläche 4 mit einem Masse- oder Erdpotential des Schienenfahrzeugs 1 verbunden ist. Weiter ist auch das Feststoffisolierelement 7 mit den Halbleitereigenschaften elektrisch mit der Dachfläche 4 und somit mit dem Erdpotential verbunden. Hierdurch ergibt sich in vorteilhafter Weise, dass die sich im Falle eines Überschlags zwischen der Hochspannungsleitung 2 und dem Feststoffisolierelement 7 akkumulierenden Ladungsträger hin zum Erdpotential abgeleitet werden. Dies wiederum reduziert die bereits erläuterte Funkenbildung und somit auch die Erosion des Feststoffisolierelements 7, wodurch eine elektrische Betriebssicherheit des Schienenfahrzeugs verbessert wird.

Es ist möglich, dass das dargestellte Feststoffisolierelement 7 aus einem ausgewerteten flüssigen oder pastösen Material ausgebildet ist. Weiter dargestellt ist, dass das Feststoffisolierelement 7 als Matte ausgebildet ist. Nicht dargestellt ist, dass in diese Matte ein elektrisch leitfähiges Element wie zum Beispiel ein Gitter eingebettet sein kann, welches mit der Dachfläche 4 oder einem nicht dargestellten Wagenkasten des Schienenfahrzeugs 1 verbunden sein kann, wobei dieser Wagenkasten ein geerdeter Wagenkasten, also mit dem Erdpotential verbundener Wagenkasten, sein kann.

Fig. 3 zeigt eine schematische Ansicht eines Dachbereichs eines Schienenfahrzeugs 1 gemäß einer weiteren Ausführungsform der Erfindung. Dargestellt ist ein Pantograph 8, der über Isolatoren 3 auf einer Dachfläche 4 des Schienenfahrzeugs 1 angebracht ist. Weiter dargestellt ist ein Feststoffisolierelement 7 mit Halbleitereigenschaften, welches direkt an der Dachfläche 4 anliegend auf dieser angeordnet ist. In dem in Fig. 3 dargestellten Ausführungsbeispiel ist dargestellt, dass der Pantograph 8 in einer gemeinsamen Projektionsebene, die senkrecht zu einer Normalen der Dachfläche 4 orientiert ist, innerhalb des Isolierelements 7 angeordnet ist. Mit anderen Worten ragt das Isolierelement 7 seitlich über die Isolatoren 3 und auch den Pantographen 8 hinaus. Hierdurch wird ein Abstand zwischen einem Rand des Pantographen 8 und der unisolierten Dachfläche 4 größer als ein vorbestimmter Abstand. Hierdurch kann eine Länge einer Kriechstrecke für elektrische Ströme, die durch das Feststoffisolierelement 7 gebildet wird, ausreichend an gewünschte Isolationseigenschaften angepasst werden.

Weiter dargestellt ist ein weiteres Feststoffisolierelement 9, welches an einer Unterseite eines Rahmens 10 des Pantographen 8 angeordnet ist. Hierbei ist das weitere Feststoffisolierelement 9 direkt an dieser Unterseite anliegend am Rahmen 10 befestigt. Der Rahmen 10 kann hierbei ein elektrisch leitfähiges Bauteil der Hochspannungskomponente sein. Auch das weitere Feststoffisolierelement 9 weist Halbleitereigenschaften auf. Bezüglich der Ausbildung dieses weiteren Feststoffisolierelements 9 kann daher auf die Ausführungen zu dem auf der Dachfläche 4 angeordneten Feststoffisolierelement 7 verwiesen werden. Hierdurch ergibt sich in vorteilhafter Weise eine weiter verbesserte elektrische Betriebssicherheit des Schienenfahrzeugs 1.

### Bezugszeichenliste

- 1: Schienenfahrzeug
- 2: Hochspannungsleitung
- 3: Isolator
- 4: Dachfläche
- 5: Feststoffisolierelement
- 6: Füße
- 7: Feststoffisolierelement
- 8: Pantograph
- 9: weiteres Feststoffisolierelement
- 10: Rahmen
- dF: Dicke der Feststoffisolierung
- dL: Luftstrecke zwischen Hochspannungsleitung und Feststoffisolierelement
- dS: Luftspalt zwischen Feststoffisolierelement und Dachfläche
- C_{L}: Kapazität der Luftstrecke
- Cs: Kapazität des Luftspaltes
- C_{F}: Kapazität der Feststoffisolierung
- U_{L}: Spannung über die Luftstrecke
- U_{S}: Spannung über den Luftspalt
- U_{F}: Spannung über der Feststoffisolierung
- U_{HV}: Hochspannung

## Patentansprüche

1. Schienenfahrzeug umfassend mindestens eine Hochspannungskomponente und mindestens ein Isolierelement (7, 9), wobei die mindestens eine Hochspannungskomponente in einem Gehäuse und das mindestens eine Isolierelement (7, 9) zwischen der Hochspannungskomponente und der Bodenfläche des Gehäuses angeordnet ist oder wobei die mindestens eine Hochspannungskomponente auf dem Fahrzeugdach und das mindestens eine Isolierelement (7, 9) zwischen der Hochspannungskomponente und der Dachfläche (4) des Fahrzeugdachs angeordnet ist,
**dadurch gekennzeichnet, dass**
das Isolierelement (7, 9) ein Feststoffisolierelement mit Halbleitereigenschaften ist, wobei das Isolierelement (7, 9) an der Bodenfläche oder der Dachfläche (4) oder an einem elektrisch leitfähigen Bereich der Hochspannungskomponente anliegt.

2. Schienenfahrzeug nach Anspruch 1, **dadurch gekennzeichnet, dass** die Bodenfläche oder die Dachfläche (4) zumindest in Teilbereichen elektrisch leitend mit dem Isolierelement (7) verbunden ist.

3. Schienenfahrzeug nach einem der vorangegangenen Ansprüche, **dadurch gekennzeichnet, dass** die Bodenfläche oder die Dachfläche (4) ein Referenzpotential aufweist.

4. Schienenfahrzeug nach einem der vorangegangenen Ansprüche, **dadurch gekennzeichnet, dass** die Hochspannungskomponente in einer gemeinsamen Projektionsebene, die senkrecht zu einer Normalen der Bodenfläche oder der Dachfläche orientiert ist, zumindest teilweise innerhalb des Isolierelements (7) angeordnet ist, wobei ein minimaler Abstand zwischen einem Rand der Hochspannungskomponente und einem Rand des Isolierelements größer als ein vorbestimmter Abstand ist.

5. Schienenfahrzeug nach einem der vorangegangenen Ansprüche, **dadurch gekennzeichnet, dass** das Isolierelement (7) zumindest teilweise aus einem ausgehärteten flüssigen, flüssig-pastösen oder pastösem Material ausgebildet ist.

6. Schienenfahrzeug nach einem der vorangegangenen Ansprüche, **dadurch gekennzeichnet, dass** das Isolierelement (7) als Matte ausgebildet ist oder eine Matte

7. Schienenfahrzeug nach Anspruch 6, **dadurch gekennzeichnet, dass** ein elektrisch leitfähiges Element in das Isolierelement (7) eingebettet ist, welches mit der Bodenfläche oder Dachfläche (4) und/oder einem Referenzpotential des Schienenfahrzeugs (1) elektrisch verbunden ist.

8. Schienenfahrzeug nach einem der vorangegangenen Ansprüche, **dadurch gekennzeichnet, dass** das Feststoffisolierelement (7) oder zusätzlich ein weiteres Feststoffisolierelement (9) mit Halbleitereigenschaften an der Hochspannungskomponente angeordnet ist.

9. Verfahren zur Herstellung eines Schienenfahrzeugs (1), wobei mindestens eine Hochspannungskomponente und mindestens ein Isolierelement (7, 9) bereitgestellt wird, wobei die mindestens eine Hochspannungskomponente in einem Gehäuse und das mindestens eine Isolierelement (7, 9) zwischen der Hochspannungskomponente und der Bodenfläche des Gehäuses angeordnet wird oder wobei die mindestens eine Hochspannungskomponente auf dem Fahrzeugdach und das mindestens eine Isolierelement (7, 9) zwischen der Hochspannungskomponente und der Dachfläche (4) des Fahrzeugdachs angeordnet wird,
**dadurch gekennzeichnet, dass**
das Isolierelement (7, 9) als ein Feststoffisolierelement mit Halbleitereigenschaften bereitgestellt wird, wobei das Isolierelement (7, 9) an der Bodenfläche oder der Dachfläche (4) oder an einem elektrisch leitfähigen Bereich der Hochspannungskomponente anliegt.

## Claims

1. Rail vehicle comprising at least one high-voltage component and at least one insulating element (7, 9), wherein the at least one high-voltage component is arranged in a housing and the at least one insulating element (7, 9) is arranged between the high-voltage component and the floor surface of the housing, or wherein the at least one high-voltage component is arranged on the vehicle roof and the at least one insulating element (7, 9) is arranged between the high-voltage component and the roof surface (4) of the vehicle roof,
**characterized in that**
the insulating element (7, 9) is a solid insulating element having semiconductor properties, the insulating element (7, 9) abutting the floor surface or the roof surface (4) or an electrically conductive region of the high-voltage component.

2. Rail vehicle according to claim 1, **characterized in that** the floor surface or the roof surface (4) is electrically conductively connected to the insulating element (7) at least in partial regions.

3. Rail vehicle according to one of the preceding claims, **characterized in that** the floor surface or the roof surface (4) has a reference potential.

4. Rail vehicle according to any one of the preceding claims, **characterized in that** the high-voltage component is arranged in a common projection plane oriented perpendicularly to a normal of the floor surface or the roof surface at least partially within the insulating element (7), wherein a minimum distance between an edge of the high-voltage component and an edge of the insulating element is greater than a predetermined distance.

5. Rail vehicle according to one of the preceding claims, **characterized in that** the insulating element (7) is formed at least partially from a cured liquid, liquid-paste or paste material.

6. Rail vehicle according to any one of the preceding claims, **characterized in that** the insulating element (7) is formed as a mat or comprises a mat.

7. Rail vehicle according to claim 6, **characterized in that** an electrically conductive element is embedded in the insulating element (7), which is electrically connected to the floor surface or roof surface (4) and/or a reference potential of the rail vehicle (1).

8. Rail vehicle according to one of the preceding claims, **characterized in that** the solid insulating element (7) or additionally a further solid insulating element (9) with semiconductor properties is arranged on the high-voltage component.

9. Method for manufacturing a rail vehicle (1), wherein at least one high-voltage component and at least one insulating element (7, 9) are provided, wherein the at least one high-voltage component is arranged in a housing and the at least one insulating element (7, 9) is arranged between the high-voltage component and the floor surface of the housing, or wherein the at least one high-voltage component is arranged on the vehicle roof and the at least one insulating element (7, 9) is arranged between the high-voltage component and the roof surface (4) of the vehicle roof, **characterized in that**
the insulating element (7, 9) is provided as a solid insulating element having semiconductor properties, wherein the insulating element (7, 9) abuts the floor surface or the roof surface (4) or an electrically conductive area of the high-voltage component.

## Revendications

1. Véhicule ferroviaire comprenant au moins un composant haute tension et au moins un élément isolant (7, 9), le au moins un composant haute tension étant disposé dans un boîtier et le au moins un élément isolant (7, 9) étant disposé entre le composant haute tension et la surface du sol du boîtier, ou le au moins un composant haute tension étant disposé sur le toit du véhicule et le au moins un élément isolant (7, 9) étant disposé entre le composant haute tension et la surface du toit (4) du toit du véhicule,
**caractérisé en ce que**
l'élément isolant (7, 9) est un élément isolant solide ayant des propriétés semi-conductrices, l'élément isolant (7, 9) étant en contact avec la surface du sol ou la surface du toit (4) ou avec une zone électriquement conductrice du composant haute tension.

2. Véhicule ferroviaire selon la revendication 1, **caractérisé en ce que** la surface du sol ou la surface de toit (4) est reliée de manière électriquement conductrice à l'élément isolant (7) au moins dans des zones partielles.

3. Véhicule ferroviaire selon l'une des revendications précédentes, **caractérisé en ce que** la surface du sol ou la surface du toit (4) présente un potentiel de référence.

4. Véhicule ferroviaire selon l'une des revendications précédentes, **caractérisé en ce que** la composante haute tension est disposée dans un plan de projection commun orienté perpendiculairement à une normale à la surface du sol ou à la surface du toit, au moins partiellement à l'intérieur de l'élément isolant (7), une distance minimale entre un bord de la composante haute tension et un bord de l'élément isolant étant supérieure à une distance prédéterminée.

5. Véhicule ferroviaire selon l'une des revendications précédentes, **caractérisé en ce que** l'élément isolant (7) est formé au moins partiellement d'un matériau liquide, liquide-pâteux ou pâteux durci.

6. Véhicule ferroviaire selon l'une des revendications précédentes, **caractérisé en ce que** l'élément isolant (7) est réalisé sous la forme d'une natte ou comprend une natte.

7. Véhicule ferroviaire selon la revendication 6, **caractérisé en ce qu'**un élément électriquement conducteur est incorporé dans l'élément isolant (7), lequel est relié électriquement à la surface du sol ou du toit (4) et/ou à un potentiel de référence du véhicule ferroviaire (1).

8. Véhicule ferroviaire selon l'une des revendications précédentes, **caractérisé en ce que** l'élément isolant solide (7) ou en outre un autre élément isolant solide (9) ayant des propriétés semi-conductrices est disposé sur le composant haute tension.

9. Procédé de fabrication d'un véhicule ferroviaire (1), dans lequel au moins un composant haute tension et au moins un élément isolant (7, 9) sont fournis, dans lequel le au moins un composant haute tension est placé dans un boîtier et le au moins un élément isolant (7, 9) est placé entre le composant haute tension et la surface du sol du boîtier ou dans lequel le au moins un composant haute tension est placé sur le toit du véhicule et le au moins un élément isolant (7, 9) est placé entre le composant haute tension et la surface du toit (4) du toit du véhicule,
**caractérisé en ce que**
l'élément isolant (7, 9) est fourni sous la forme d'un élément isolant solide ayant des propriétés semi-conductrices, l'élément isolant (7, 9) étant en contact avec la surface du sol ou la surface du toit (4) ou avec une zone électriquement conductrice du composant haute tension.
